Europäisches Patentamt

European Patent Office

Office européen des brevets

(11) Numéro de publication: **0 225 955**
**A1**

## (12) DEMANDE DE BREVET EUROPEEN

(21) Numéro de dépôt: 85402406.4

(51) Int. Cl.4: **G02C 11/02**

(22) Date de dépôt: **04.12.85**

(43) Date de publication de la demande:
**24.06.87 Bulletin 87/26**

(84) Etats contractants désignés:
**AT BE CH DE FR GB IT LI LU NL SE**

(71) Demandeur: **Contensou, Bruno**
**54, rue Perronet**
**F-92200 Neuilly sur Seine(FR)**

(72) Inventeur: **Contensou, Bruno**
**54, rue Perronet**
**F-92200 Neuilly sur Seine(FR)**

(74) Mandataire: **Sauvage, Renée**
**Cabinet Sauvage 100 bis, avenue de**
**Saint-Mandé**
**F-75012 Paris(FR)**

(54) Monture de lunettes à garniture colorée amovible et interchangeable.

(57) L'invention concerne une monture de lunettes translucide comportant deux parties adaptées chacune à encercler un verre de lunette, un pont nasal et des branches, une gorge (5) étant ménagée dans lesdites parties de cerclage et étant adaptée à recevoir une garniture colorée (7) visible au travers de ladite monture.

La gorge (5) se referme sur elle-même après avoir contourné l'intégralité de la périphérie externe des parties de cerclage, ladite gorge (5) étant ménagée dans la tranche de cette périphérie sauf au niveau du pont nasal (3) où la gorge pénètre dans ledit pont tout en demeurant ouverte sur l'extérieur, ladite garniture (7) étant constituée d'un bracelet élastique amovible, introduit et retenu dans ladite gorge par le seul fait de son élasticité.

FIG4

## Monture de lunettes à garniture colorée amovible et interchangeable.

La présente invention a pour objet une monture de lunettes translucide comportant deux parties adaptées chacune à encercler un verre de lunette, un pont nasal et des branches, une gorge étant ménagée dans lesdites parties de cerclage et étant adaptée à recevoir une garniture colorée visible au travers de ladite monture.

Des montures d'un type approchant ont été proposées par exemple dans le brevet GB-A 466 034, la demande DE-A-33 04 347 et le brevet US-A-2 752 713.

Selon le brevet GB-A-466 034, la garniture colorée est constituée de cire ou de peinture à l'eau appliquée dans la gorge ; on comprend que la mise en place de cette garniture et son enlèvement pour remplacement demandent du temps et probablement un nettoyage de la gorge avant l'introduction d'une garniture d'une autre couleur.

Dans la monture objet de la demande DE-A-33 04 347, des canaux sont prévus dans les parties de cerclage et les branches, et un liquide coloré peut être introduit dans ces canaux comme garniture : outre la difficulté de moulage de telles montures, elles doivent comporter un système de bouchage évitant la fuite du liquide coloré.

Enfin, le brevet US-A-2 752 713 décrit une monture dont seules les parties de cerclage sont pourvues d'une garniture, et deux garnitures séparées sont nécessaires par paire de lunettes.

La présente invention a pour but d'apporter un moyen simple permettant de faire varier instantanément l'aspect d'une monture, une seule garniture suffisant à agrémenter les deux parties de cerclage et le pont nasal.

Ce but est atteint en ce sens que la gorge se referme sur elle-même après avoir contourné l'intégralité de la périphérie externe des parties de cerclage, ladite gorge étant ménagée dans la tranche de cette périphérie sauf au niveau du pont nasal où la gorge pénètre dans ledit pont tout en demeurant ouverte sur l'extérieur, ladite garniture étant constituée d'un bracelet élastique amovible, introduit et retenu dans ladit gorge par le seul fait de son élasticité.

La garniture peut être constituée d'un unique bracelet ou de plusieurs bracelets torsadés pour donner des effets différents.

Dans une forme d'exécution particulière de l'invention, une gorge contourne, en outre, l'intégralité de la périphérie de chaque branche, ladite gorge étant ménagée dans la tranche de cette périphérie sauf au niveau de la courbure interne de la branche venant épouser l'oreille du porteur, en cours d'utilisation, la gorge pénétrant, à ce niveau, dans la branche tout en demeurant ouverte sur l'extérieur et étant adaptée à recevoir un bracelet élastique coloré, amovible, introduit et retenu dans ladite gorge par le seul fait de son élasticité.

De cette manière, non seulement la partie frontale de la monture est décorée, mais encore les branches.

Une forme d'exécution de l'invention est décrite ci-après en référence aux dessins annexés dans lesquels :

- la figure 1 est une vue en perspective partielle d'une monture selon l'invention,

-la figure 2 est une vue en coupe prise selon la ligne II-II de la figure 1, à plus grande échelle, une partie de la garniture ayant été conservée au-delà du plan de coupe,

-la figure 3 est une vue en élévation, de face, d'une partie de monture selon la figure 1,

-la figure 4 est une vue similaire à la figure 3, mais de l'arrière, et

-la figure 5 est une vue de détail d'une branche, prise de l'arrière.

Si l'on se réfère aux dessins, on voit une monture de lunettes, désignée dans son ensemble par la référence 1, comportant deux parties de cerclage 2 pour verres de lunettes, un pont nasal 3 et des branches 4 dont une seule est visible.

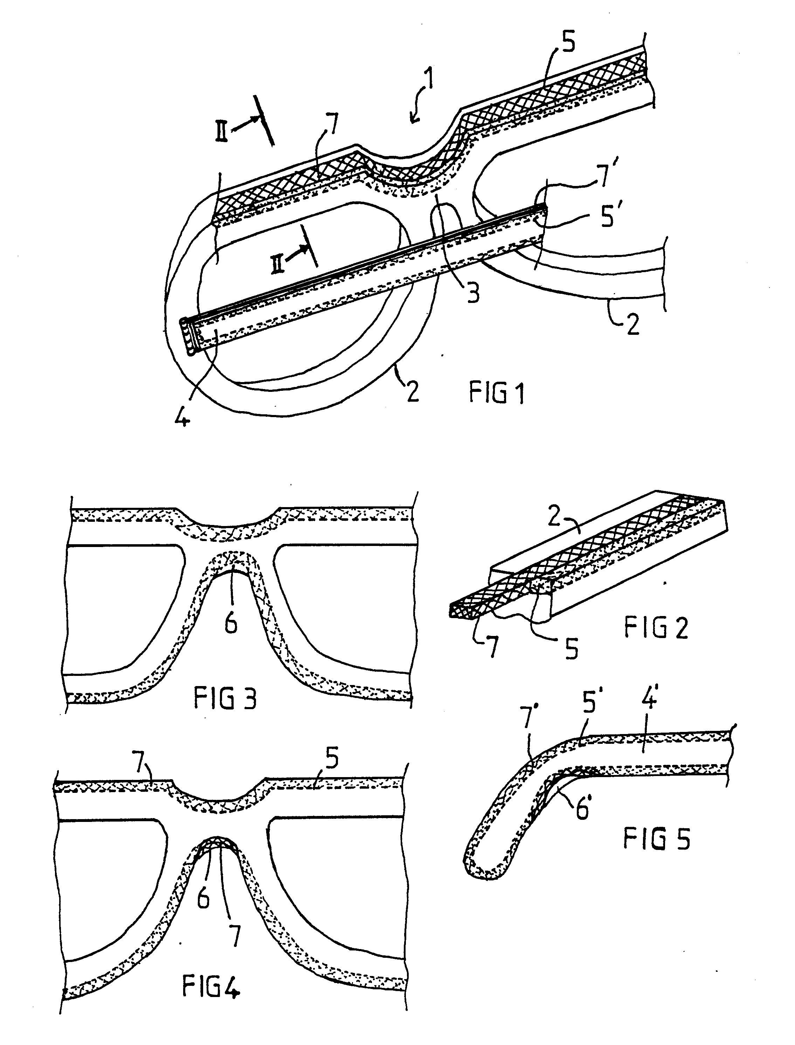

Une gorge 5 est ménagée dans la périphérie extérieure des parties de cerclage 2 et dans la face arrière du pont 3. A la figure 1, on n'a représenté cette gorge 5 que sur une partie de la périphérie des parties de cerclage pour ne pas surcharger le dessin, mais en fait la gorge 5 affecte toute la périphérie externe de la monture. Comme il ressort de la figure 3, au niveau du pont 3, la gorge définit un organe de retenue 6.

La gorge 5 est adaptée à recevoir un bracelet élastique 7 (figure 2) qui, grâce à l'organe de retenue 6 du pont 3, épouse parfaitement la périphérie des parties de cerclage 2.

Une gorge 5' similaire est prévue dans la périphérie des branches 4 et, comme à la figure 1, on n'a représenté la gorge 5' que sur une partie de la branche. Un organe de retenue 6' ménagé au niveau de la courbure intérieure de la branche permet, à l'instar de l'organe de retenue 6 du pont, d'obtenir de la garniture 7' qu'elle épouse parfaitement la périphérie de la branche.

On comprend que les garnitures 7 et 7' tiennent en place du fait de leur seule élasticité et qu'elles peuvent instantanément être extraites des gorges 5 et 5' et remplacées.

Il est bien entendu que la présente invention n'est pas limitée à la forme d'exécution décrite et représentée. En particulier, afin de donner des effets spéciaux, les branches et la monture pourraient présenter des parties polies et des parties dépolies.

## Revendications

1-Monture de lunettes translucide comportant deux parties adaptées chacune à encercler un verre de lunette, un pont nasal et des branches, une gorge (5) étant ménagée dans lesdites parties de cerclage et étant adaptée à recevoir une garniture colorée (7) visible au travers de ladite monture, caractérisée en ce que ladite gorge (5) se referme sur elle-même après avoir contourné l'intégralité de la périphérie externe des parties de cerclage, ladite gorge (5) étant ménagée dans la tranche de cette périphérie sauf au niveau du pont nasal (3) où la gorge pénètre dans ledit pont tout en demeurant ouverte sur l'extérieur, ladite garniture (7) étant constituée d'un bracelet élastique amovible, introduit et retenu dans ladite gorge par le seul fait de son élasticité.

2-Monture selon la revendication 1, caractérisée en ce que la garniture est constituée d'un unique bracelet élastique.

3-Monture selon la revendication 1 ou 2, caractérisée en ce qu'une gorge contourne, en outre, l'intégralité de la périphérie de chaque branche (4), ladite gorge étant ménagée dans la tranche de cette périphérie sauf au niveau de la courbure interne de la branche venant épouser l'oreille du porteur, en cours d'utilisation, la gorge pénétrant, à ce niveau, dans la branche tout en demeurant ouverte sur l'extérieur et étant adaptée à recevoir un bracelet élastique coloré, amovible, introduit et retenu dans ladite gorge par le seul fait de son élasticité.

FIG 1

FIG 3

FIG 2

FIG 4

FIG 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | WO-A-8 403 154 (P. PETERSEN)<br>* En entier * | 1-3 | G 02 C 11/02 |
| D,Y | GB-A- 466 034 (J.A. CUNDY)<br>* En entier * | 1-3 | |
| D,Y | DE-A-3 304 347 (V.G. MÜLLER)<br>* En entier * | 1-3 | |
| D,A | US-A-2 752 713 (R.W.J. FRANKLIN)<br>* En entier * | 1-3 | |
| A | US-A-2 842 028 (A.B. BELGARD)<br>* En entier * | 1-3 | |
| E | FR-A-2 565 367 (B. CONTENSOU)<br>* En entier * | 1-3 | |

DOMAINES TECHNIQUES
RECHERCHES (Int. Cl.4)

G 02 C 11/02

Le présent rapport de recherche a été établi pour toutes les revendications

| Lieu de la recherche | Date d'achèvement de la recherche | Examinateur |
|---|---|---|
| LA HAYE | 31-07-1986 | CALLEWAERT-HAEZEBROU |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82